# EUROPEAN PATENT APPLICATION

(11) **EP 0 768 488 A2**
(43) Date of publication of application: **16.04.1997**
(21) Application number: 96307046.1
(22) Date of filing: 27.09.1996
(51) Int. Cl.: F16L 9/147

(54) **Metal tubing coated with multiple layers of polymeric materials**

(30) Priority: 10.10.1995 US 541855
(71) Applicant: BUNDY CORPORATION, Warren Michigan 48090-2001 (US)
(72) Inventor: Hsich, Henry S., Cary, North Carolina 27511 (US); Soles, Dennis C., Rochester Hills, Michigan 48309 (US)
(74) Representative: Watts, Peter Graham

(57) **Abstract**

A tube coating system for protecting a metal tube (10). An inner layer (12) of a plastic-like polymeric material is extruded around the tube to provide protection against corrosive media. An outer layer (14) of a multiphase elastomer-like polymeric material is co-extruded around the inner layer (12) to provide chipping and wear resistance and to isolate or absorb mechanical vibrations and acoustic noises.

## Description

### Background of the Invention

This invention relates to metal tubing products, and more particularly, to metal tubing used in the automotive industry for applications such as brake lines, fuel lines and transmission oil cooling lines.

Tubing utilized in automotive applications requires corrosion resistance that will allow it to last for the useful life of a vehicle. Also, the tubing must have abrasion resistance consistent with an automotive environment (i.e. stone impingement). Finally, the tubing should be able to isolate and absorb mechanical vibrations and acoustic noises. To satisfy these requirements, a protective coating is usually applied to metal tubing which is to be utilized in automotive applications.

Coatings used in the industry have generally been characterized by one or both of the following. First, a metallic substrate is deposited on the steel tube surface. Usually this is a sacrificial coating wherein the substrate corrodes before the metal tubing. Second, a barrier coating is deposited over the substrate to keep corrosive media from initiating corrosion and to provide increased abrasion resistance.

Examples of past materials and combinations of materials used as substrate and/or barrier layers in the automotive industry include: terne (an alloy of nominally 85% lead and 15% tin); zinc-rich paint over terne; a zinc-aluminum alloy (consisting of 95% zinc and 5% aluminum - available under the trademark GALFAN); aluminum rich paint over a GALFAN coating; electroplated zinc or zinc-nickel; PVF or PVDF over electroplated zinc; hot dip aluminum; epoxy and nylon.

These materials have been used as barrier and/or substrate layers in various combinations, but have experienced shortcomings that limit their usefulness. Prior art coating materials and methods have exhibited only limited resistance to wear and chipping from stone impingement and abrasion. Often, a shrinkable thermoplastic jacket is applied around conventionally coated tubes in order to provide improved chipping and wear resistance. Such methods, however, are very expensive and are not always effective. For example, shrinkable plastic jackets have only limited ability for absorbing or isolating mechanical vibrations and acoustic noises. Also, use of shrinkable plastic jackets is problematic in that the relatively high thickness of the jacket precludes its use under end fittings or connectors, thereby exposing the tube end to corrosion.

The present invention provides coated metal tubing having outstanding corrosion and chipping resistance, and an ability to isolate or absorb mechanical vibration and acoustic noises.

### Summary of the Invention

The present invention provides a tube coating system comprising a metal tube, an inner layer of a plastic-like polymeric material extruded around the metal tube to provide protection against corrosive media, and an outer layer of a multiphase elastomer-like polymeric material extruded around the inner layer to provide chipping and wear resistance and to isolate or absorb mechanical vibrations and acoustic noises.

### Brief Description of the Drawings

Figure 1 is a sectional view of a portion of a coated tube according to the present invention; and
Figure 2 is a sectional view of the coated tube of Figure 1 having one end stripped to facilitate connection to end fittings.

### Detailed Description of the Invention

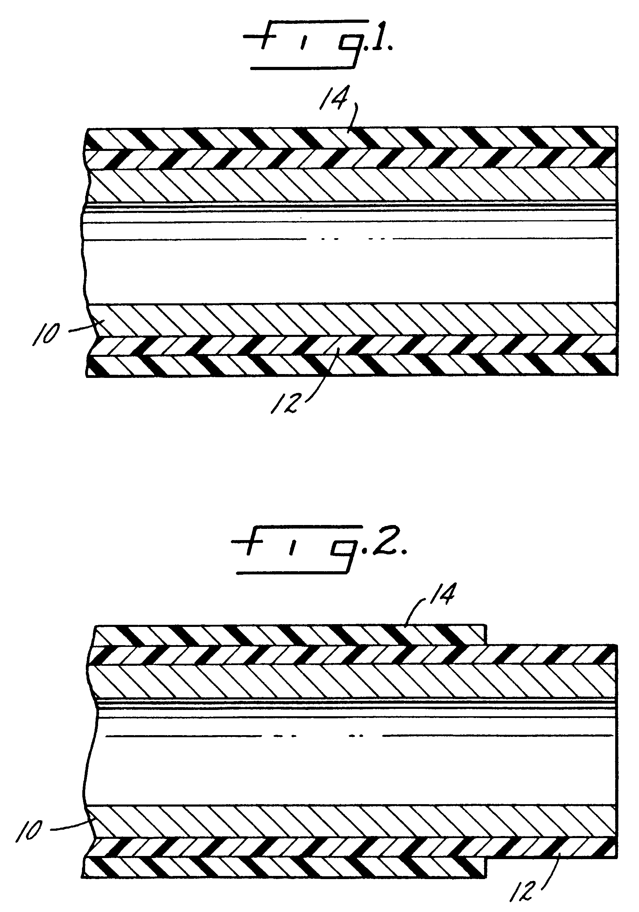

Figure 1 illustrates a metal tube 10 coated according to the present invention. Tube 10 is a normal metal tube. A copper brazed steel tube such as that sold under the trademark BUNDYWELD by Bundy Corporation, the present assignee, is an example.

Tube 10 is coated by an inner layer 12 and an outer layer 14 of polymeric materials. Layers 12 and 14 are co-extruded onto tube 10. Coextrusion is advantageous in that it permits application of layers 12 and 14 simultaneously and at high line processing speeds. Simultaneous extrusion of multiple layers and the apparatus for such (an extruder) are well known and detailed discussion is not necessary for a complete understanding of this invention.

Inner layer 12 is a plastic- or nylon-like polymeric material. The material for layer 12 is chosen for its chemical and liquid resistance. Layer 12 keeps corrosive media from reaching or attacking the underlying metal tube 10. The polymeric material chosen for layer 12 should be particularly resistant to corrosive media or fluids commonly encountered in automotive applications, such as brake fluid, engine oil and fuel.

Preferably, layer 12 is a thermoplastic or thermoset selected from the group consisting of polyamides, fluoropolymers, polyphenylene sulfides, polyacetals, polyesters, unsaturated polyesters, epoxies and phenolic resins.

Outer layer 14 is an elastomer-like polymeric material. It is complementary to inner layer 12 in that, while inner layer 12 provides protection against chemicals and corrosive liquids, outer layer 14 provides resistance to chipping and wear from stone impingement and abrasion. Layer 14 provides heat insulation and thermal protection as well. Additionally, layer 14 is a multiphase polymeric material (a blend of two or more polymers). As such, it can be tailored with specific dampening characteristics (natural frequency and transmissibility) to isolate or absorb forced frequencies of mechanical vibrations and acoustic noise.

Outer layer 14 is preferably a thermoplastic elastomer chosen from the group consisting of copolymers or polymer blends/alloys of polyamides, polyesters, polyolefins, vinyl, chlorinated ethylene and nitrile.

Together, layers 12 and 14 produce a synergistic effect to provide outstanding performance. Inner layer 12 provides protection against harmful chemicals and corrosive liquids, while outer layer 14 dissipitates impact energy to improve chipping and wear resistance and also isolates or absorbs mechanical vibrations and acoustic noises. Prior protective tube coating systems, such as application of a shrinkable plastic jacket over a tube coated with a sacrificial metallic substrate, are less desirable as they require slower secondary operations such as cutting, positioning and shrinking the tubing.

Layers 12 and 14 are applied to tube 10 through coextrusion. They are not bonded together through use of an adhesive or any other bonding method. This is advantageous as the elastomer-like outer layer 14 can be stripped at the ends of tube 10, as illustrated in Figure 2, to facilitate connection to end fittings or connectors.

Various features of the present invention have been described with reference to the embodiments shown and described. It should be understood, however, that modification may be made without departing from the spirit and scope of the invention as represented by the following claims.

## Claims

1. A coated metal tubing product characterised by:
a metal tube (10);
a corrosion-resistant layer (12) surrounding and directly contacting said tube (10), wherein said corrosion-resistant layer (12) consists of a thermoplastic polymer; and
an abrasion-resistant layer (14) surrounding and directly contacting said corrosion-resistant layer (12), wherein said abrasion-resistant layer (14) consists of a thermoplastic elastomer.

2. A coated metal tubing product as claimed in claim 1 characterised in that said corrosion-resistant and abrasion-resistant layers (12, 14) are co-extruded onto said metal tube (10).

3. A coated metal tubing product as claimed in claim 1 or 2 characterised in that said thermoplastic polymer is selected from the group consisting of polyamides, fluoropolymers, polyphenylene sulfides, polyacetals, polyesters, unsaturated polyesters, epoxies and phenolic resins.

4. A coated metal tubing product as claimed in any one of claims 1 to 3 characterised in that said thermoplastic elastomer is a multiphase thermoplastic elastomer.

5. A coated metal tubing product as claimed in any one of claims 1 to 3 characterised in that said thermoplastic elastomer is a multiphase polymeric material.

6. A coated metal tubing product as claimed in any one of claims 1 to 3 characterised in that said thermoplastic elastomer is selected from the group consisting of copolymers or polymer blends of polyamides, polyesters, polyolefins, vinyl, chlorinated ethylene and nitrile.

7. A coated metal tubing product as claimed in any one of claims 1 to 6 characterised in that said metal tube (10) extends between two ends, and said abrasion-resistant layer (14) is stripped adjacent at least one of said ends to facilitate connection to end fittings.
